# EUROPEAN PATENT APPLICATION

(11) **EP 4 249 351 A1**
(43) Date of publication of application: **27.09.2023**
(21) Application number: 22163322.5
(22) Date of filing: 21.03.2022
(51) Int. Cl.: B62D 21/03

(54) **A CROSS MEMBER ASSEMBLY FOR JOINING TWO RAILS OF A VEHICLE FRAME**

(71) Applicant: VOLVO TRUCK CORPORATION, 405 08 Göteborg (SE)
(72) Inventor: AR, Shreeharsha, 560054 Bengaluru Karnataka (IN); RAMEGOWDA, Rasanjaya, 560036 Bengaluru Karnataka (IN); MYSORE RAMESH, Deepak, 570017 Mysore Karnataka (IN)
(74) Representative: Plasseraud IP

(57) **Abstract**

The invention relates to a cross member assembly (7) for joining two rails of a vehicle frame, comprising:
- a center member (10) having two side ends (13);
- a side member (20) for attaching each side end of the center member to the corresponding rail;
- an adapter (30) for connecting the center member and the side member;
- a fastener (50) for securing the center member (10), the side member (20) and the adapter (30) in an operational position.

The adapter (30) has:
- a first connecting feature (34) for cooperating with a first connecting part (14) of the center member side end with no freedom of movement along the transverse direction;
- a second connecting feature (35) for cooperating with a second connecting part (25) of the side member with no freedom of movement along the transverse direction;
so that a width of the cross member assembly (7) is determined.

## Description

### TECHNICAL FIELD

The invention relates to a cross member assembly for joining two rails of a vehicle frame. The invention further relates to a set for forming such a cross member assembly, and to a vehicle comprising at least one such cross member assembly.

The invention can be applied in light, medium and heavy-duty vehicles, such as trucks, buses and construction equipment.

### BACKGROUND

Conventionally, a vehicle frame comprises two rails which extend in a longitudinal direction, and at least one cross member assembly extending along a transverse direction and joining the rails. A cross member assembly typically comprises a center member having side ends, each side end being secured to the corresponding rail by means of at least one side member.

Depending on the applications, there exists several vehicle frames which in particular differ in the transverse dimensions between rails. This can result from the variable spacing between rails, but also from the rail thickness, and/or from the presence or absence of a liner on the facing surfaces of the rails.

Consequently, in order to satisfy the requirements of the market, there is a need to provide cross member assemblies having different widths. This is conventionally achieved through the provision of several center members having various widths.

Such a diversity in center members is undesirable for production, logistical and stock management reasons. It further impairs flexibility and increases the overall cost.

Therefore, there is room for improvement regarding the management of current diversities in cross member assemblies.

### SUMMARY

An object of the invention is to provide a cross member assembly which solves at least part of the problems of the prior art, especially related to the dimensional diversity required by the market.

For this purpose, and according to a first aspect, the invention concerns a cross member assembly for joining two rails of a vehicle frame which extend in a longitudinal direction, the cross member assembly extending along a transverse direction. The cross member assembly comprises:
- a center member having two side ends;
- on each side end of the center member, at least one side member for attaching the center member to the corresponding rail;
- on at least one side end of the center member, an adapter for connecting the center member and the side member;
- at least one fastener for securing the center member, the side member and the adapter in an operational position.

Moreover, the adapter has:
- at least one first connecting feature configured for cooperating with a first connecting part of the center member side end with no freedom of movement along the transverse direction;
- at least one second connecting feature configured for cooperating with a second connecting part of the side member with no freedom of movement along the transverse direction;
wherein the first connecting feature is configured to position the center member side end relative to the side member, whereby a width of the cross member assembly is determined.

The "operational position" is the mounted position of the cross member assembly on the vehicle, in which the width of an element is the dimension of said element along the transverse direction.

Thus, owing to the invention, changing the width of the cross member assembly can be achieved by changing the adapter. In an embodiment, changing the width of the cross member assembly can even be achieved only by changing the adapter. It has to be noted that changing the adapter does not necessarily means changing the adapter width; it could rather means changing the adapter structure and/or geometry, as will be explained hereinafter.

As a result, the invention makes it possible to provide a single and common center member (and also preferably a single and common side member) for covering the market requirements in terms of transverse spacing between rails of the vehicle frame. The required adaptability is transferred from the center member to the adapter, which can be a far less complex part and which can be significantly smaller than the center member. Therefore, the invention allows reducing the tooling investment and production costs, as well as the storage and transport problems.

Besides, providing an adapter is further advantageous in terms of mechanical strength. Indeed, the adapter may act as a reinforcing part; it can help to distribute the shear forces in the interface between the center member and the side member (typically in fasteners), due to added thickness.

Another advantage of the invention is that it can be easily implemented. Replacing a conventional cross member assembly by a cross member assembly according to the invention does not require significant modifications; it does not hamper other systems nor does it involve packaging changes.

The terms "with no freedom of movement along the transverse direction" means that, when the connecting feature of the adapter and the connecting part of the center member side end - respectively the connecting part of the side member - cooperate, there is one single possible position of these elements relative to each other along the transverse direction. If the position changes, there is no cooperation any more, or no cooperation is possible any more. These terms do not mean that the pieces cannot move relative to one another but it rather means that, if they move relative to one another, then no cooperation is possible any more.

In an embodiment, one given connecting feature is configured to cooperate with a single connecting part. In an embodiment, one given connecting part is configured to cooperate with a single connecting feature.

According to one embodiment, the first and second connecting parts are holes that are in facing relationship along a mounting direction that is orthogonal to the transverse direction. For example, said mounting direction is the vertical direction. Moreover, at least one of the first and second connecting parts can be an elongated hole along the transverse direction. In an embodiment, only one elongated hole is provided.

One of the first and second connecting parts can be a circular hole.

The fastener may be arranged parallel to the mounting direction and may engage the first and second connecting parts.

The first connecting feature, respectively the second connecting feature, can comprise an elongated protrusion that fits into the elongated hole. By "fits" is meant that there is no possible relative movement between the concerned elements. Moreover, the small dimension of the elongated hole corresponds to the fastener diameter.

In an embodiment, the second connecting feature, respectively the first connecting feature, comprises a circular hole formed in the adapter which is substantially identical to the circular hole forming the second connecting part, respectively the first connecting part. Moreover, the fastener diameter is substantially identical to the diameter of these circular holes, and the circular hole in the adapter is formed through the elongated protrusion at a predetermined location.

The man skilled in the art will understand that identical or substantially identical dimensions include a functional play when necessary.

The circular hole in the adapter may be formed in the middle of the elongated protrusion along the transverse direction.

Alternatively, the circular hole in the adapter may be formed at an end of the elongated protrusion along the transverse direction. In such an embodiment, one and the same adapter can be placed in one of two mirrored arrangements, thereby making it possible to set two different widths of the cross member assembly.

The adapter may have a plane of symmetry which is orthogonal to the transverse direction.

In the operational position, the center member side end can be sandwiched between the side member and the adapter.

In an embodiment, the adapter is plate-shaped. Preferably, its transverse dimension (in the operational position) is smaller than the transverse dimension of the portion of the side member that is coupled to or that faces the center member side end. Said portion can be a horizontal wing of a bracket, such as a L-shaped bracket.

In an embodiment, the elongated hole is arranged on the center member and thus forms the first connecting part.

The cross member assembly may comprise:
- a set of N first connecting features on the adapter and N first connecting parts on the center member side end, each one of the first connecting features cooperating with a corresponding one of the first connecting parts;
- and a set of N second connecting features on the adapter and N second connecting parts on the center member side end, each one of the second connecting features cooperating with a corresponding one of the second connecting parts;
wherein N > 2, and for example N = 4.

The cross member assembly may comprise at least one adapter on each side end of the center member.

The invention also relates to a cross member assembly for joining two rails of a vehicle frame which extend in a longitudinal direction (X), the cross member assembly extending along a transverse direction (Y) and comprising:
- a center member having two side ends;
- on each side end of the center member, at least one side member for attaching the center member to the corresponding rail;
- on at least one side end of the center member, an adapter for connecting the center member and the side member;
- at least one fastener for securing the center member, the side member and the adapter in an operational position;
wherein:
- the center member has at least one first hole and the side member has at least one second hole, one of the first and second holes having a section that is substantially circular and corresponds to a fastener diameter, while the other one of the first and second holes is an elongated hole which is elongated along the transverse direction and which has a small dimension corresponding to the fastener diameter;
- the adapter comprises an elongated protrusion that is engaged in the elongated hole, and preferably fits the elongated hole, and a third hole provided through said elongated protrusion at a predetermined location, the third hole having a section that is substantially circular and corresponds to a fastener diameter;
- in the operational position, the first, second and third holes are in facing relationship along a mounting direction that is orthogonal to the transverse direction, the at least one fastener being arranged parallel to the mounting direction and engaged in the first, second and third holes.

According to a second aspect, the invention concerns a set for forming a cross member assembly as previously described.

In an embodiment, the set may comprise:
- a center member;
- one side member at each side end of the center member;
- a kit comprising at least one adapter of a first type and one adapter of a second type different from the first type;
so as to allow forming at least two cross member assemblies having different widths.

Preferably, the set includes one single center member, and only one kind of side member.

The types of the adapter may differ by the relative positions of the first connecting feature and the second connecting feature.

For example, in one type of adapter, one connecting feature is arranged offset relative to the other connecting feature, and the adapter is configured for being connected to the center member and to the side member according to a first position and according to a second position which is the symmetrical of the first position with respect to a plane orthogonal to the transverse direction, so that said type of adapter allows forming at least two cross member assemblies having different widths.

In an embodiment, the set may comprise:
- a center member;
- one side member at each side end of the center member;
- at least one adapter in which one connecting feature is arranged offset relative to the other connecting feature, and the adapter is configured for being connected to the center member and to the side member according to a first position and according to a second position which is the symmetrical of the first position with respect to a plane orthogonal to the transverse direction;
so as to allow forming at least two cross member assemblies having different widths.

According to a third aspect, the invention concerns a vehicle having a frame comprising two rails which extend in a longitudinal direction, the vehicle frame further comprising at least one cross member assembly as previously described, with the cross member assembly extending along a transverse direction and joining the rails.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
Fig. 1 is is a perspective view of a vehicle according to an embodiment of the invention;
Fig. 2 is a perspective view of a vehicle frame comprising a cross member assembly according to an embodiment of the invention;
Fig. 3 is a perspective view of the cross member assembly of figure 2, comprising a center member, side members and adapters;
Fig. 4 is a perspective view of a center member;
Fig. 5 is a perspective view of a side member;
Fig. 6 is a perspective view of an adapter from one side;
Fig. 7-8 are perspective views of two embodiments of an adapter, from another side;
Fig. 9 is a perspective view of a piece used to make an adapter according to an embodiment of the invention;
Fig. 10 is an exploded detailed view of a side end of a;
Fig. 11 is a view of the cross member assembly side end of figure 10, in the mounted position;
Fig. 12-14 are cross-section views of cross member assembly side ends according to three different implementations.

### DETAILED DESCRIPTION OF EXAMPLE EMBODIMENTS OF THE INVENTION

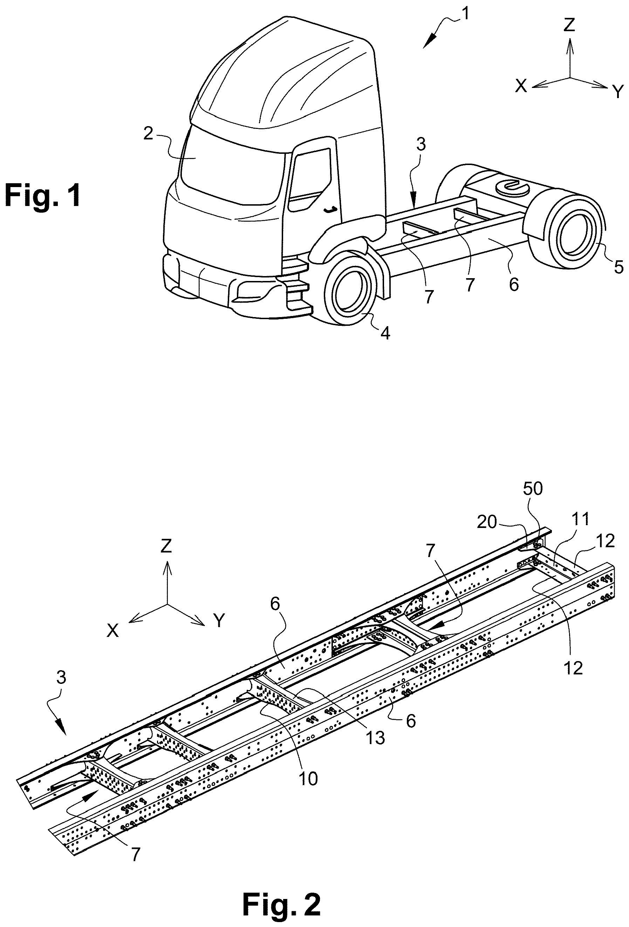

Figure 1 shows a vehicle 1, such as a truck, which comprises a cab 2 mounted on a frame 3 supported by front wheels 4 and rear wheels 5. Z is defined as the vertical direction, X is defined as the longitudinal direction of the vehicle 1, and Y is defined as the transverse direction of the vehicle 1. The frame 3 typically comprises two rails which extend in the longitudinal direction X, as well as at least one cross member assembly 7 which extends in the transverse direction Y and which joins the rails 6.

The cross member assembly 7 basically comprises a center member 10, side members 20 for attaching the center member 10 to the corresponding rail 6, at least one adapter 30 for connecting the center member 10 and the side member 20, and fasteners 50 for securing the center member 10, the side member 20 and the adapter 50 in an operational position, i.e. the mounted position of the cross member assembly 7 on the vehicle 1, as shown in figures 1-3 and 11-14.

The center member 10, side members 20 and adapter(s) 30 can be made in a metallic material, for example from a metallic sheet or profile, by folding, cutting and/or drilling operations, or from a casting process.

The center member 10 can be a U-shaped piece having a base wall 11 extending in a plane (Y,Z) in the operational position and two wings 12 extending in a plane (X,Y) in the operational position. The center member 10 has two side ends 13, each side end 13 being attached to the corresponding rail 6 by means of at least one side member 20. In the illustrated embodiment, two side members 20 are provided at each side end 13 of the center member 10, with one side member 20 attached to each wing 12.

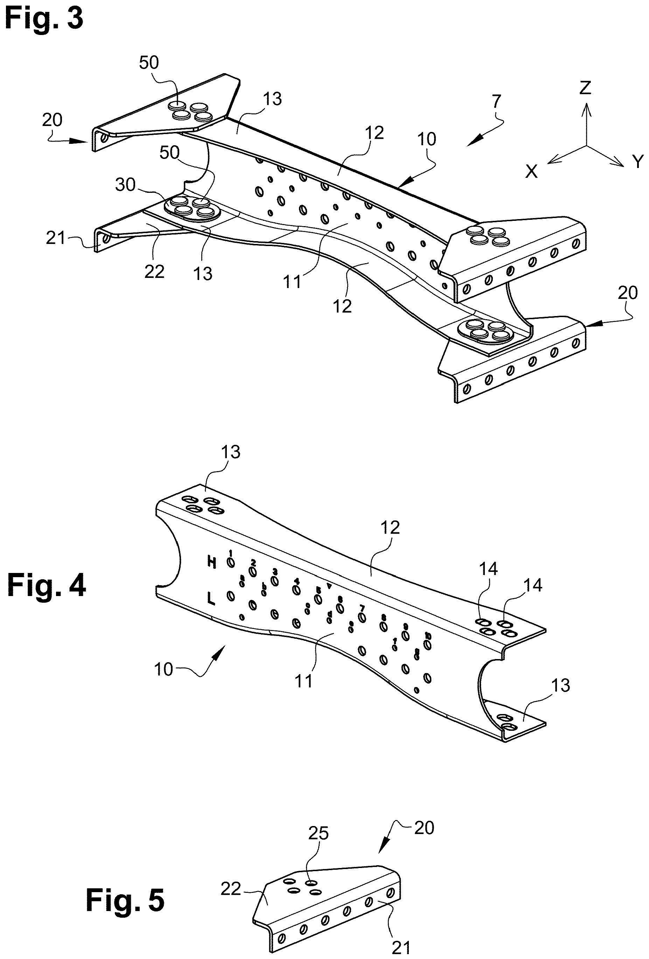

As best shown in figure 5, the side member 20 can form a bracket. It can be L-shaped, with one wing 21 extending in a plane (X,Z) secured to one rail 6, and one wing 22 extending in a plane (X,Y) secured to a side end 13 of the center member 10.

On at least one side end 13 of the center member 10, there is provided an adapter 30 for connecting the center member 10 and the side member 20. The adapter 30 is used to set a desired width of the cross member assembly 7 - i.e. its dimension along the transverse direction Y - depending on the vehicle applications and frame structures.

If several side members 20 are provided at one side end 13, then preferably one adapter 30 is provided for each side member 20 at said side end 13. For example, as shown in figure 3 where the cross member assembly 7 comprises two side members 20 at one side end 13 of the center member 10, then two adapters 30 are provided at said side end 13. In the illustrated embodiments, there is provided at least one adapter 30 (here two adapters 30) on each side end 13 of the center member 10. However, this should not be considered as limiting, as adapting the width of the cross member assembly 7 could be achieved by means on adapters 30 arranged only at one of the center member side ends 13.

Now is described the coupling arrangement between one side member 20 and the corresponding side end 13 of the center member 10, by means of one adapter 30 and of one or several fasteners 50. The fastener 50 can be a rivet comprising a shaft 51 having a diameter d51 and two end heads 52 having a diameter d52 larger than d51.

On its side end 13, for example on a wing 12, the center member 10 may have at least one first hole 14 which can be elongated along the transverse direction Y, while the small dimension of which is substantially identical to the diameter 51 of the fastener shaft 51. This first hole 14 forms a first connecting part of the center member side end 13.

On the wing 22 which forms the portion connected to the center member side end 13, the side member 20 may have at least one second hole 25 which can be substantially circular with a diameter substantially identical to the diameter 51 of the fastener shaft 51. This second hole 25 forms a second connecting part of the side member 20.

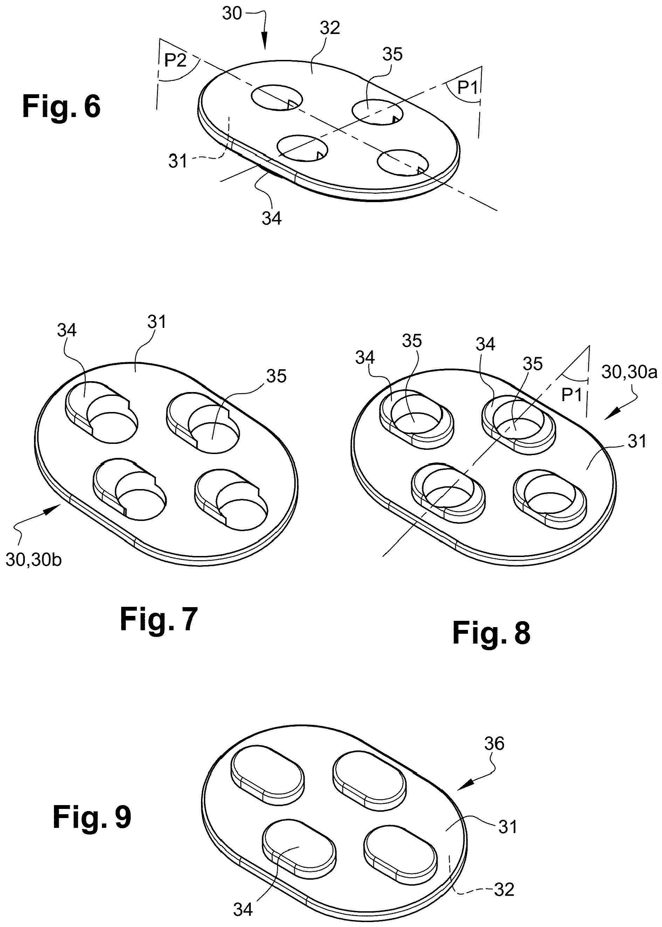

The adapter 30 is described with reference to figures 6 to 9.

The adapter 30 can be plate-shaped with opposite first and second faces 31, 32. The adapter 30 can have an oblong shape which, in the mounted position, extends along the transverse direction Y. The adapter 30 may have a first plane of symmetry P1 orthogonal to the longitudinal direction X, and a second plane of symmetry P2 orthogonal to the transverse direction Y, at least as regards its periphery.

The adapter 30 comprises an elongated protrusion 34 which protrudes from the first face 31 and which extends along the transverse direction Y, in the mounted position. The elongated protrusion 34 is shaped and dimensioned to be engaged and to fit the first hole 14 arranged in the center member 10. The elongated protrusion 34 forms a first connecting feature of the adapter 30.

The adapter 30 further comprises a third hole 35 which is provided through the elongated protrusion 34 at a predetermined location. The third hole 35 has a section that is substantially circular with a diameter substantially identical to the diameter 51 of the fastener shaft 51. This third hole 35 forms a second connecting feature of the adapter 30.

In the operational position, the first, second and third holes 14, 25, 35 are in facing relationship along a mounting direction that is orthogonal to the transverse direction Y, the mounting direction being for example the vertical direction Z. The fastener 50 is arranged parallel to the mounting direction Z and is engaged in the first, second and third holes 14, 25, 35.

Thus, in this operational position:
- as the elongated protrusion 34 fits the first hole 14 arranged in the center member 10, the adapter 30 is in a fixed position relative to the center member 10,
- and as the fastener 50 engages the second hole 25 of the side member 20 and the third hole 35 of the adapter 30, the adapter 30 is in a fixed position relative to the side member 20,
the adapter 30 makes it possible to secure the center member 10 and the side member 20 together, at a predetermined relative position.

In other words, the adapter 30 allows setting the width of the cross member assembly 7.

Although the above description refers to holes 14, 25, 35 and to an elongated protrusion 34, the invention encompasses other embodiments in which the adapter has:
- at least one first connecting feature configured for cooperating with a first connecting part of the center member side end 13 with no freedom of movement along the transverse direction Y;
- at least one second connecting feature configured for cooperating with a second connecting part of the side member 20 with no freedom of movement along the transverse direction Y;
wherein the first connecting feature is configured to position the center member side end 13 relative to the side member 20, whereby a width of the cross member assembly 7 is determined.

It may be envisaged that more than one first hole 14, second hole 25, elongated protrusion 34 and third hole 35 are provided, for improving the positioning and mechanical strength of the cross member assembly 7. For example, in the non-limiting embodiment shown in the figures, the center member side end 13 comprises four such first holes 14 which may be arranged substantially at the apices of a parallelogram. Similarly, the side member 20 comprises four second holes 25 arranged identically, while the adapter 30 comprises four elongated protrusions 34 and four third holes 35 arranged accordingly.

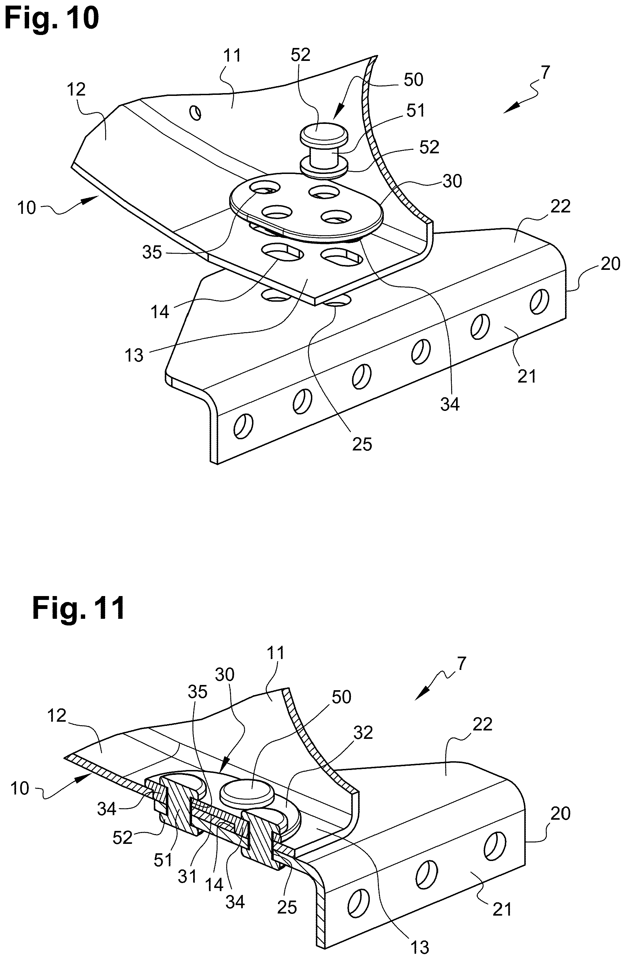

As shown in figures 10 and 11, in the operational position, the center member side end 13 can be sandwiched between the side member 20 and the adapter 30, with the fastener(s) 50 pressing the center member 10, side member 20 and adapter 30 against each other. Then, preferably, the thickness of the elongated protrusion 34 (along vertical direction Z) is substantially identical or lower than the thickness of the wing 12 of the center member 10 at the side end 13. Besides, the elongated protrusion 34 serves as a guide, helps to maintain the fastener skewness, and ensures the proper fastener filling which is a significant design requirement.

Depending on the configuration of the adapter 30, several cross member assemblies 7 having different widths can be obtained.

An adapter 30a of a first type is illustrated in figure 8. In this adapter 30a, the third hole 35 is formed in the middle of the elongated protrusion 34 along the transverse direction Y. Then, the whole adapter 30a, including the elongated protrusion 34 and third holes 35, is symmetrical with respect to plane P1.

An adapter 30b of a second type is illustrated in figure 7. In this adapter 30b, the third hole 35 is offset relative to the elongated protrusion 34, for example formed at an end of the elongated protrusion 34, along the transverse direction Y.

The adapters 30a, 30b of the first and second types may be conveniently made from a common blank 36 illustrated in figure 9. This blank or piece 36 is identical to an adapter 30, without the third holes 35. The manufacturing process of all required adapters 30, 30a, 30b can thus include a first step of manufacturing the piece 36, for example by a casting process, and subsequently forming the third holes 35 at the appropriate location along the elongated protrusions 34, for example by a drilling or machining process.

Owing to the invention, there can be provided a set for forming a cross member assembly 7 which comprises:
- a center member 10, preferably one and a single kind of center member 10;
- side members 20;
- and a kit comprising several specific adapters 30.

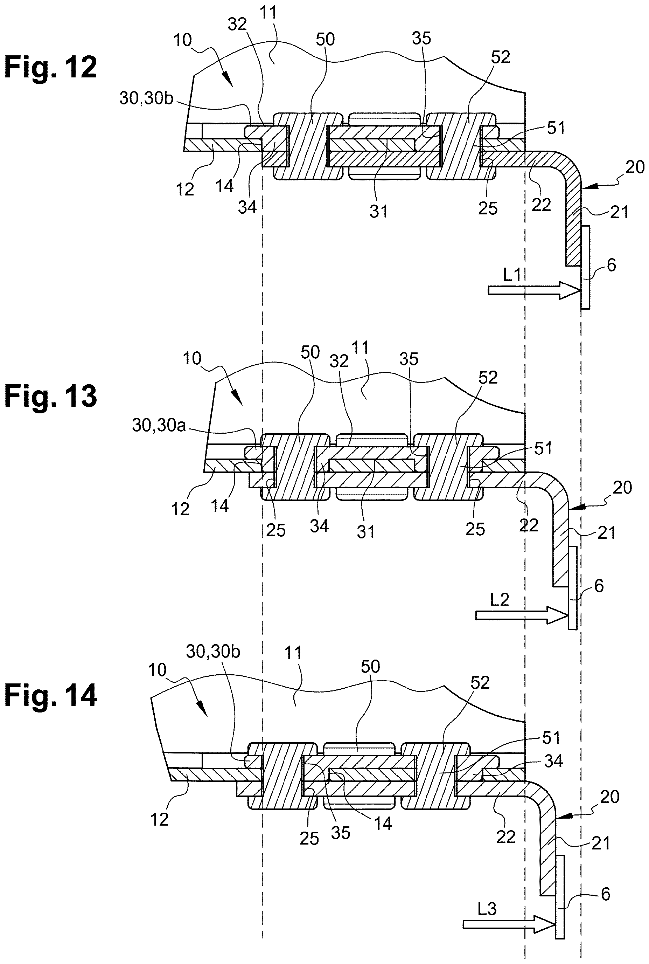

With such a set, several cross member assemblies 7 having different widths can be formed, as shown in figures 12 to 14.

In figure 13, the cross member assembly 7 comprises the adapter 30a of the first type of figure 8. The width of the cross member assembly 7 is then set to be L2, for example around 826 mm.

In figure 12, the cross member assembly 7 comprises the adapter 30b of the second type of figure 7, arranged according to a first position in which the third holes 35 are located closer to the wing 21 of the side member 20 secured to the vehicle rail 6. As compared to the arrangement of figure 13, the arrangement of figure 12 allows forming a cross member assembly 7 having a width L1 which is smaller than L2. L1 can be around 816 mm.

In figure 14, the cross member assembly 7 also comprises the adapter 30b of the second type of figure 7, but it is arranged according to a second position which is the symmetrical of the first position with respect to plane P1. Thus, in this second position, the third holes 35 are located farther from the wing 21 of the side member 20 secured to the vehicle rail 6. As compared to the arrangement of figure 13, the arrangement of figure 14 allows forming a cross member assembly 7 having a width L3 which is higher than L2. L3 can be around 836 mm.

Consequently, the invention allows forming several cross member assemblies 7 having different widths.

This can be achieved through the provision of adapters 30 having different geometries, for example which differ by the relative positions of the elongated protrusion 34 and third hole 35, such as at least one adapter 30a of the first type and one adapter 30b of the second type as previously described.

Alternatively, or in addition, this can be achieved through the provision of adapters 30b of a single type, but which have an asymmetrical shape and can be arranged in one of two mirrored positions. Such an adapter 30b alone allows forming two cross member assemblies 7 having different widths, which is particularly advantageous.

Thus, the invention allows reducing the diversity of pieces which are necessary to form the variants of cross member assemblies required by the various applications and needs in the market. With a single and common kind of center member and several types of adapters, possibly only two types, at least three cross member assemblies having different widths can be obtained. This is a significant improvement in terms of tooling investment, required storage and transport volume, and of vehicle parts management. Moreover, the quality variation resulting from the different center members is eliminated. Besides, as the adapter acts as a reinforcing part, the invention helps to drastically reduce the fastener shear forces, and therefore to reduce maintenance costs.

It is to be understood that the present invention is not limited to the embodiments described above and illustrated in the drawings; rather, the skilled person will recognize that many changes and modifications may be made within the scope of the appended claims.

## Claims

1. A cross member assembly (7) for joining two rails (6) of a vehicle frame (3) which extend in a longitudinal direction (X), the cross member assembly (7) extending along a transverse direction (Y) and comprising:
- a center member (10) having two side ends (13);
- on each side end (13) of the center member (10), at least one side member (20) for attaching the center member (10) to the corresponding rail (6);
- on at least one side end (13) of the center member (10), an adapter (30, 30a, 30b) for connecting the center member (10) and the side member (20);
- at least one fastener (50) for securing the center member (10), the side member (20) and the adapter (30) in an operational position;
wherein the adapter (30) has:
- at least one first connecting feature (34) configured for cooperating with a first connecting part (14) of the center member side end (13) with no freedom of movement along the transverse direction (Y);
- at least one second connecting feature (35) configured for cooperating with a second connecting part (25) of the side member (20) with no freedom of movement along the transverse direction (Y);
wherein the first connecting feature (34) is configured to position the center member side end (13) relative to the side member (20), whereby a width of the cross member assembly (7) is determined.

2. The cross member assembly according to claim 1, **characterized in that** the first and second connecting parts (14, 25) are holes that are in facing relationship along a mounting direction (Z) that is orthogonal to the transverse direction (Y), wherein at least one of the first and second connecting parts (14, 25) is an elongated hole along the transverse direction (Y).

3. The cross member assembly according to claim 2, **characterized in that** one of the first and second connecting parts (14, 25) is a circular hole.

4. The cross member assembly according to claim 2 or claim 3, **characterized in that** the fastener (50) is arranged parallel to the mounting direction (Z) and engages the first and second connecting parts (14, 25).

5. The cross member assembly according to any one of claims 2 to 4, **characterized in that** the first connecting feature (34), respectively the second connecting feature (35), comprises an elongated protrusion that fits into the elongated hole (14).

6. The cross member assembly according to claims 3, 4 and 5, **characterized in that** the second connecting feature (35), respectively the first connecting feature (34), comprises a circular hole formed in the adapter (30) which is substantially identical to the circular hole forming the second connecting part (25), respectively the first connecting part (14), wherein the fastener (50) diameter is substantially identical to the diameter of these circular holes, and wherein the circular hole in the adapter (30) is formed through the elongated protrusion (34) at a predetermined location.

7. The cross member assembly according to claim 6, **characterized in that** the circular hole (35) in the adapter (30) is formed in the middle of the elongated protrusion (34) along the transverse direction (Y).

8. The cross member assembly according to claim 6, **characterized in that** the circular hole (35) in the adapter (30) is formed at an end of the elongated protrusion (34) along the transverse direction (Y).

9. The cross member assembly according to any one of claims 1 to 8, **characterized in that** the adapter (30) has a plane of symmetry (P1) which is orthogonal to the transverse direction (Y).

10. The cross member assembly according to any one of claims 1 to 9, **characterized in that**, in the operational position, the center member side end (13) is sandwiched between the side member (20) and the adapter (30).

11. The cross member assembly according to any one of claims 1 to 10, **characterized in that** the adapter (30) is plate-shaped.

12. The cross member assembly according to any one of claims 2 to 11, **characterized in that** the elongated hole (14) is arranged on the center member (10) and thus forms the first connecting part (14).

13. The cross member assembly according to any one of claims 1 to 12, **characterized in that** it comprises:
- a set of N first connecting features (34) on the adapter (30) and N first connecting parts (14) on the center member side end (13), each one of the first connecting features (34) cooperating with a corresponding one of the first connecting parts (14);
- and a set of N second connecting features (35) on the adapter (30) and N second connecting parts (25) on the center member side end (13), each one of the second connecting features (35) cooperating with a corresponding one of the second connecting parts (25);
wherein N > 2.

14. The cross member assembly according to any one of claims 1 to 13, **characterized in that** it comprises at least one adapter (30) on each side end (13) of the center member (10).

15. A set for forming a cross member assembly (7) according to any one of claims 1 to 14, comprising:
- a center member (10);
- one side member (20) at each side end (13) of the center member (10);
- a kit comprising at least one adapter (30, 30a) of a first type and one adapter (30, 30b) of a second type different from the first type;
so as to allow forming at least two cross member assemblies (7) having different widths.

16. The set of claim 15, wherein the types of the adapter (30, 30a, 30b) differs by the relative positions of the first connecting feature (34) and the second connecting feature (35).

17. The set of claim 16, wherein in one type of adapter (30, 30b), one connecting feature (35) is arranged offset relative to the other connecting feature (34), and the adapter (30) is configured for being connected to the center member (10) and to the side member (20) according to a first position and according to a second position which is the symmetrical of the first position with respect to a plane (P1) orthogonal to the transverse direction (Y), so that said type of adapter (30, 30b) allows forming at least two cross member assemblies (7) having different widths.

18. A set for forming a cross member assembly (7) according to any one of claims 1 to 14, comprising:
- a center member (10);
- one side member (20) at each side end (13) of the center member (10);
- at least one adapter (30, 30b) in which one connecting feature (35) is arranged offset relative to the other connecting feature (34), and the adapter (30, 30b) is configured for being connected to the center member (10) and to the side member (20) according to a first position and according to a second position which is the symmetrical of the first position with respect to a plane (P1) orthogonal to the transverse direction (Y);
so as to allow forming at least two cross member assemblies (7) having different widths.

19. A vehicle (1) having a frame (3) comprising two rails (6) which extend in a longitudinal direction (X), the vehicle frame (3) further comprising at least one cross member assembly (7) according to any one of claims 1 to 14, with the cross member assembly (7) extending along a transverse direction (Y) and joining the rails (6).
